# EUROPEAN PATENT APPLICATION

(11) **EP 3 121 641 A1**
(43) Date of publication of application: **25.01.2017**
(21) Application number: 15002544.3
(22) Date of filing: 28.08.2015
(51) Int. Cl.: G02B 27/58, G02B 17/06

(54) **A METHOD FOR RECONSTRUCTING AN IMAGE OF DISTANT ASTRONOMICAL OBJECTS AND A TELESCOPIC SYSTEM FOR CARRYING OUT THIS METHOD**

(30) Priority: 22.07.2015 CZ 20150511
(71) Applicant: Ceské vysoké ucení technické v Praze, 115 19 Praha 1 (CZ)
(72) Inventor: Chadzitaskos, Goce, 251 65 Ondrejov (CZ); Kosejk, Vladislav, 405 02 Decín 34 (CZ); Cervený, Jaroslav, 163 00 Praha 6 (CZ)
(74) Representative: Kratochvil, Vaclav

(57) **Abstract**

Problem to be solved: Existing telescopic systems for capturing images of distant objects in the firmament (17) have large constructed mirrors for high resolution. Large-diameter mirrors are not easy to produce, maintain, or adjust towards the firmament. Some applications for data processing, however, do not need razor-sharp images and the use of these telescopes in these cases is unprofitable.

Solution: The method of reconstructing images of distant astronomical objects (15) is carried out from images (18) taken with a telescopic system which has a parabolic strip as a lens (3). The telescopic system then reconstructs the image (23) of the distant objects (15).

## Description

### Field of the invention

The invention relates to a method for reconstructing an image of distant objects and a telescopic system for carrying out this method suitable for observing distant objects in astronomy.

### Background of the invention

The most widely used devices for viewing distant objects in astronomy are mirror telescopic systems whose lenses have a periphery in the shape of a circle or a regular n-gon and whose angular resolution is almost the same in all directions. Telescopes are fixed on support structures called the mount. The mount assembly is used for sensitively positioning and directing the telescope toward the observed sky. A mirror, or reflecting, telescope uses a concave mirror as a lens. This mirror displays the tracked objects to an image plane where there may be placed a camera; a secondary mirror, or a small plane mirror inclined at 45° to reflect the image on the side of a tube so as to not shield the main mirror. Cassegrain type telescopes hold a secondary convex mirror which directs the image to the eyepiece located at the bottom of the telescope. The accuracy of observation is affected by the angular resolution, which characterizes the ability of the telescope to distinguish between two points over the smallest possible angle. Telescopes exist with a diameter of the mirror in the lens from tens of centimeters up to about 30 meters.

The disadvantages of the above designs lie in the high demands in the construction of precisely made mirrors for lenses which do not contain defects. Even the smallest defect affects the observation and results in mistakes in observation, or renders it completely impossible. Constructionally, telescopic systems with large lenses are poorly operable, difficult to maintain (e.g. cleaning from dust), and expensive in terms of acquisition costs. Another disadvantage of conventional systems is the high weight of the primary optical elements, so transport to the earth's orbit is difficult to realize.

The aforementioned disadvantages of standard telescopic systems are eliminated by the creation of a telescopic system whose lens is formed by a strip concave segment for reflecting light onto the image plane, the camera, or eyepiece lens located at its focal point. The design is described e.g. in patent CZ 298313 B, and in document CN 2552029 Y. This segment, which forms the lens, rotates, whereby the rotation axis is the axis of the image passing through the lens, the focal point of the strip concave segment, and the center of the strip segment. The strip segment is gradually rotated about the axis of rotation, and in each position of rotation there is created a record of the image captured from the focal point of the segment. Subsequently, all the images from a complete rotation of the telescope of 360° are merged using software into a single image which corresponds to observation using a conventional lens. This eliminates the need to manufacture technically demanding concave mirrors having a large diameter for the desired angular resolution.

The disadvantages of this design consist in the fact that for long strip segments a mount must be used which not only correctly and sensitively adjusts the direction of the telescope towards the observed sky, but it also must allow for the precise rotation of the strip segment. The mount is costly, since it must meet strict demands for accuracy of automatic movement within the rotation and tracking of celestial objects, so that the partial images are not different at each rotation due to mechanical inaccuracies and wear of the support structure. The telescope also requires a large space so that the segment may carry out undisturbed rotation.

The present invention is the creation of a method of reconstruction of an image of distant objects from even a single image, and the creation of a telescopic system for carrying out this method that will be cheaper, will have smaller demands for space, and will be able to reconstruct an image with different resolutions in two orthogonal directions with an accuracy sufficient for many other astronomical applications.

### Summary of the invention

This object is solved by a method of reconstructing an image of distant astronomical objects and a telescopic system for carrying out this method developed by this invention.

The method of reconstructing an image of distant objects works with a telescopic system. The telescopic system is provided with an optical lens which is rectilinear along one axis of the reticle, concave along the second axis and whose projection onto the plane perpendicular to the optical axis of the lens is rectangular. During the process of the method, the lens is set in the direction of the observed distant objects in the firmament, and the astronomical camera records an image of the distant objects. The image is recorded on a digital pixel array comprising pixels arranged in a column formed with a constant number of pixels per column.

The essence of the invention consists in that in a single image generated without rotating the lens around the optical axis, for each remote object there is recorded a segment of constant length and of constant intensity to the known number of activated pixels by incident light. The segment is proportional to the height of the optical lens. Subsequently, the image is processed sequentially column by column, where for each column the number of activated pixels is, by inverse display, converted to a record of a standard image of the intensity of light captured by the conventional optical lens, and the resulting conventional image is created through the integration of individual partial results from each column.

The process allows for the acquisition of images of objects existing in the firmament similar to the recording of images of the same objects with a large telescope mirror. The image is taken by a simpler telescopic system, whereupon it is transformed and completed so as to be useful in certain applications. This method makes it possible to save the working time of the largest known telescopes which would otherwise have to take sets of images for these less demanding applications.

Part of the invention is also a telescopic system for carrying out the method according to the invention.

The telescopic system is provided with an optical lens. The lens is rectilinear along one axis of the reticle, concave along the second axis, and its projection onto the plane perpendicular to the optical axis of the lens is rectangular. The lens is mounted on the system on an adjustable support structure while the telescope is provided with at least one means for receiving light rays reflected by the optical lens to its focal point.

The essence of the invention consists in that the supporting structure consists of a fixed base provided with parallactic assembly, to which an optical lens is firmly attached. The lens is parabolically concave along the second axis to form a parabolic strip. The means for receiving the light is formed by an astronomical camera which is connected with at least one control and evaluation means. The parabolic strip is structurally simpler to operate than the entire parabolic mirror without defects. It is possible to make the fabric of the strip from inexpensive materials, and a reflective layer is then applied to the strip. Telescopic system can be easily produced and assembled.

In a preferred embodiment of the telescopic system according to the invention, the lens is removable from the parallactic assembly. This detachability facilitates the transport of the telescopic system.

In a preferred embodiment of the telescopic system according to the invention, there are two means for receiving the light in the system. The first means is arranged at the focal point of the lens and is formed by a secondary optics for adjusting the parameters of the light rays reflected by the lens, and the second means is formed by the astronomical camera arranged in the trajectory of light rays adjusted by the secondary optics. The secondary optics adjusts the parameters of the reflected light rays. It may filter them or focus them outside the focal point of the parabolic strip so that in the area of the focal point the shielding of the parabolic strip is limited. The astronomical camera is able to record even very subtle changes of light rays coming from the interstellar space of the firmament.

In a preferred embodiment of the telescopic system according to the invention, the secondary optics consists of a parabolic mirror strip, or a mirror, and the astronomical camera is arranged in the focal point of the parabolic mirror strip. The secondary optics transmits the image from the focal point of the main parabolic strip to the camera positioned outside the active region of the telescope.

In a preferred embodiment of the telescopic system according to the invention, the control and evaluation means comprises a set including an electronic module for controlling the parallactic assembly and astronomical camera, and further comprises a computing device for processing the recorded data. The computing device includes at least one data storage for storing at least one software module and the measured data, and at least one processing unit for executing the programs stored in the software modules.

The telescopic system is not only operated when targeting objects in the firmament, but the captured images are processed directly by the method according to the invention.

The software module includes at least one program for image reconstruction comprising at least one algorithm for image processing, in which the program searches for active pixels in the individual columns of the image and which sequentially, column by column, converts through inverse imaging into a conventional image, then draws an image of the conventional view by integrating the results of each column.

The advantages of the telescopic system and method using the telescopic system are its low construction cost, good portability, simple design of the parabolic strip of the lens of the telescopic system, the speed of work, and the quality of the results.

### Description of the drawings

The invention will be further illustrated by the following drawings, wherein:
Fig. 1 shows a schematic representation of the telescopic system,
Fig. 2 shows a schematic representation of a computing device,
Fig. 3 schematically depicts the execution of the reconstruction of the image of distant objects.

### Examples of embodiments of the invention

It is understood that the hereinafter described and illustrated specific examples of the realization of the invention are presented for illustrative purposes and not as a limitation of the examples of the realization of the invention to the cases shown herein. Experts who are familiar with the state of technology shall find, or using routine experimentation will be able to determine, a greater or lesser number of equivalents to the specific realizations of the invention which are specifically described here. These equivalents shall also be included into the scope of the patent claims.

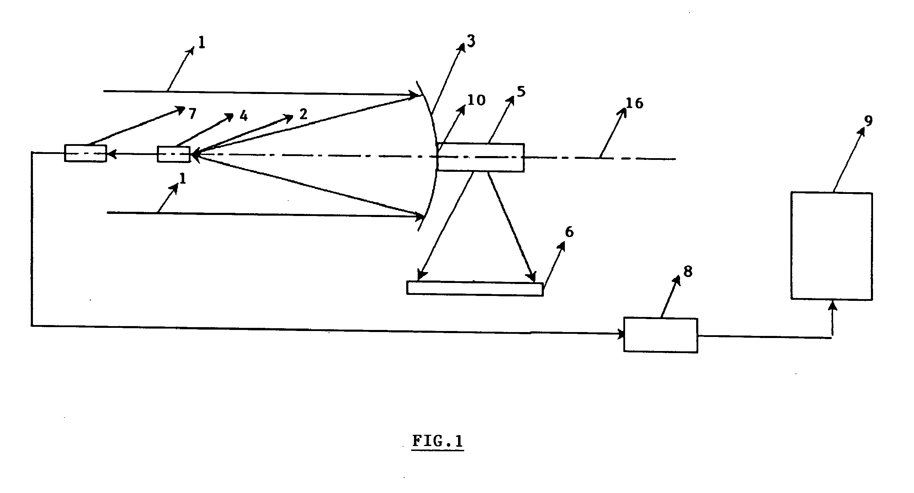

The construction of the telescopic system illustrated schematically in Fig. 1 comprises a fixed base **6** with parallactic assembly **5** upon which is rigidly attached an optical lens **3** in the form of a parabolic strip. The base **6** provides stability to the telescope, and the parallactic assembly **5** allows for the adjustment of the optical axis **16** of the lens **3** towards the remote objects **15**. Setting the parallactic assembly **5** is controlled via the electronic control module **8**.

The lens **3** is provided with a reflective coating to reflect the light rays **1** into its focal point **2**. In the area of the focal point **2** are located the secondary optics **4**, which in a specific example of the embodiment consists of a set of optical filters and lenses for adjusting and focusing the light rays to the astronomical camera **7**. In another embodiment, the secondary optics **4** consists of a convex mirror for reflecting the image from the primary mirror **3** to the astronomical camera **7**. A possible plane mirror or prism serves for transmitting the image to the camera **7**. The astronomical camera **7** is comprised of a digital chip with high resolution, ie. with a high density of pixels **21** - elementary image elements. The pixel **21** is a dimensionless unit describing the smallest active area in a bitmap image. The pixels **21** are arranged in parallel columns **20** with a finite number of pixels **21** in each column **20**.

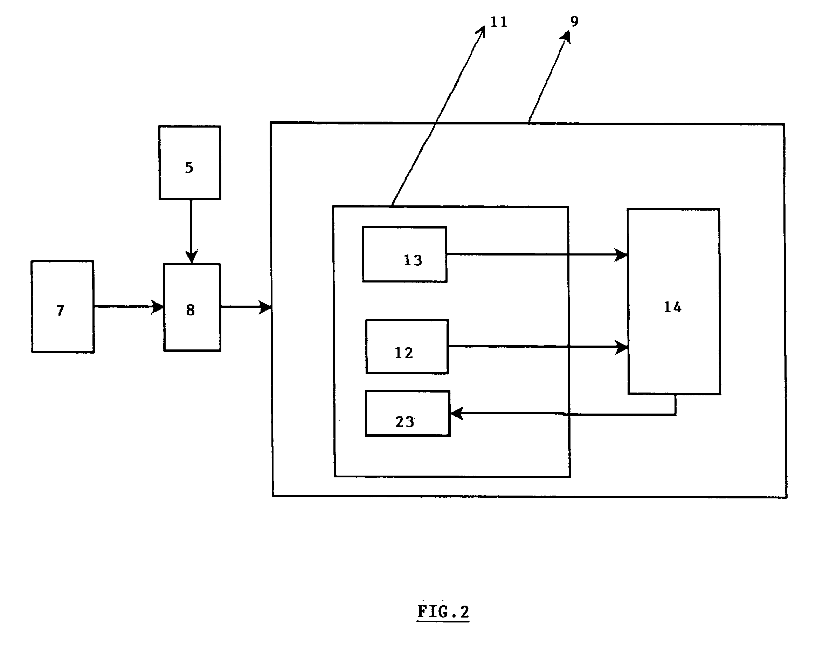

The digital image **18** is sent from the astronomical camera **7** to the calculation unit **9** for processing. The calculation unit **9** schematically shown in Fig. 2 includes at least one data storage **11** comprising a permanent memory to which is recorded the digital image **18** of the astronomical camera **7**. Further, in the data storage **11** there is stored at least one software module **12** which, on the basis of software integrated into the processing unit, carries out a method of reconstructing the image of the distant objects **15**. The computing unit comprises a laptop or desktop computer, wherein the electronic control module may also be integrated in the computer.

The work with the telescopic system and method for reconstructing the image of distant objects **15** from the image **18** acquired using the non-rotating parabolic lens **3** and astronomical camera **7** includes the following steps:
The base **6** is established and the parallactic assembly **5** is set so that the optical axis **16** follows the movements of the distant objects **15** in the firmament **17**.

To the parallactic assembly **5** there is attached, in a fixed connection **10**, the lens **3** and the astronomical camera **7** of the telescope, wherein the astronomical camera **7** is connected to a computing unit **9** and the electronic control module **8**.

Via the electronic control module **8** the positions of the tracked objects **15** in the firmament **17** are entered and the parallactic assembly **5** is set exactly at the specified position, after which the electronics control module **8** activates the astronomical camera **7**, which captures an image **18** of the distant objects **15**.

In the computing unit **9** the image **18** is saved and the processing unit **14**, on the basis of a program from the software module **12**, reconstructs the resulting image **23** from the image **18**, after which the telescopic system is then ready to capture a new image **18** and reconstruct its image **23**.

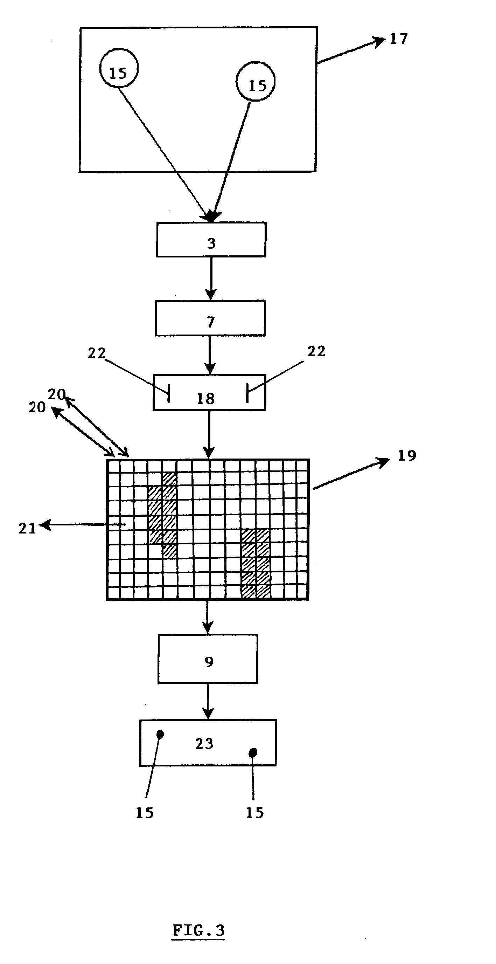

Fig. 3 shows a diagram of the operation of the method of image **23** reconstruction and of the telescopic system. Distant objects **15** in the firmament **17** are photographed by the astronomical camera **7**, which on the basis of its resolution creates a digital image **18**.

The distant object **15** is a star from which light rays **1** emanate and whose light intensity is different for each distant object **15**. On the digital image **18**, these light point objects **15** are displayed as segments **22** with a constant length and constant light intensity. The segments **22** are proportional to the size of the parabolic strip **3**. The digital image **18** is formed by the pixel array **19** (Fig. 3 shows a very simplified diagram for illustration; the resolution of the pixels and their columns is in fact much greater) composed of columns **20** of pixels **21**. The segments **22** are shown as a particular number of activated pixels **21**, which for the calculation is labeled K. In the event that two adjacent distant objects **15** situated one above the other are recorded, their segments **22** in the columns **20** of pixels **21** may overlap. Each analyzed column **20** with pixels **21** may be described as x_n.

Simultaneously, when, in the conventional view of the image **23** formed by the conventional lens, the intensities of the observed objects **15** at each point of the standard image **23** are indicated as one above the other as a plurality of numbers f(x_n), then for the recorded intensities on the image **18** and denoted by F(x_n), the function F(x_i) = sum f(x_n) applies, where n takes the values from i to i+K.

In an inverse mathematical representation, the relationship F(x_i+1) - F(x_i) = f(x_1+K) - f(x_i) is used. The calculation starts in column **20** of pixels **21** from the first active pixel **21** marking the beginning of the displayed segment **22**, where for all inactive pixels **21** before the beginning of the segment **22** in the given column **20**, the relationship f(x_i) = 0 applies. Once this is done for all the columns **20** and the resulting part of the conventional display is interconnected, we achieve a reconstructed true image **23** in the given resolution.

The resulting image **23** can be worked with in other astronomical applications for which a conventional telescopic system would otherwise have to be used.

### Industrial applicability

The method of reconstructing an image of distant astronomical objects and the telescopic system for carrying out this method according to the invention shall find application primarily at astronomical worksites involved in research or preventive monitoring of the firmament.

### Overview of the positions used in the drawings

- 1: light rays
- 2: focal point of optical lens
- 3: optical lens
- 4: secondary optics
- 5: parallactic mount
- 6: base
- 7: astronomical camera
- 8: camera control electronics module and assembly
- 9: computing device
- 10: fixed connection between lens and parallactic assembly
- 11: data storage
- 12: software module
- 13: measured data
- 14: processing unit
- 15: distant object
- 16: optical axis
- 17: firmament
- 18: image from astronomical camera
- 19: pixel array
- 20: column of pixels
- 21: pixel
- 22: segment
- 23: conventional image

## Claims

1. A method for reconstructing an image of distant objects (15) observed by a telescopic system with an optical lens (3) which is rectilinear along one axis of the reticle, concave along the second axis, and whose projection onto the plane perpendicular to the optical axis (16) of the lens (3) is rectangular, in which the lens (3) is set in the direction of the observed distant objects (15) in the firmament (17) and the astronomical camera (7) records an image (18) of the distant objects (15) on a digital pixel array (19) comprising arranged columns (20) with a constant number of pixels (21), **characterized in that** on a a single image (18) created without rotating the lens (3) around the optical axis (16), there is recorded, for each remote object (15), a segment (22) of constant length and constant intensity on a known number of activated pixels (21) which is proportional to the height of the optical lens (3), then the image (18) is processed sequentially column (20) after column (20), where for each column (20) the number of activated pixels (21) is converted by inverse display to a record of a standard image (23) of the intensity captured by a conventional optical lens, and the resulting conventional image (23) is rendered by the integration of the individual partial results from each column (20).

2. A telescopic system with optical lens (3) which is rectilinear along one axis of the reticle, concave along the second axis, and whose projection onto the plane perpendicular to the optical axis of the lens (3) is rectangular, is mounted on an adjustable support structure and simultaneously is provided with at least one means for receiving light rays (1) reflected by the optical lens (3), **characterized in that** the supporting structure comprises a fixed base (6) provided with a parallactic assembly (5) to which is firmly connected the optical lens (3), which is parabolically concave along the second axis to form a parabolic strip, and the means for receiving the light comprises an astronomical camera (7) which is connected with at least one control and evaluation means.

3. A telescopic system according to claim 2, **characterized in that** the lens (3) is removable from the parallactic assembly.

4. A telescopic system according to claim 2 or 3, **characterized in that** there are two means for receiving the light in the system, where the first is arranged in the focal point (2) of the lens (3) and comprises a secondary optics (4) for adjusting the parameters of the light rays (1) reflected by the lens (3), and the second means comprises an astronomical camera (7) arranged in the trajectory of the light rays adjusted by the secondary optics (4).

5. A telescopic system according to claim 4, **characterized in that** the secondary optics (4) is formed by a parabolic mirror strip and the astronomical camera (7) is arranged in the focal point of the parabolic mirror strip.

6. A telescopic system according to any of claims 2 to 5, **characterized in that** the control and evaluation means comprises an assembly that includes an electronic control module (8) for the parallactic mounting (5) and astronomical camera (7) and a computing device (9) for processing the recorded data.

7. A telescopic system according to claim 6, **characterized in that** the computing device (9) includes at least one data storage (11) for storing at least one software module (12) and measured data (13) and at least one processor unit (14) for carrying out the programs stored in the software modules (12).

8. A telescopic system according to claim 7, **characterized in that** the software module (12) includes at least one program for reconstructing the image and contains at least one algorithm for processing the image (18) in which the program searches for active pixels (21) in each column (20) of the image (18) and which gradually, column (20) by column (20), converts it, by inverse display, into a conventional drawing, then draws an image (23) of conventional representation by integrating the results of the individual columns (20).
